# DEMANDE DE BREVET EUROPEEN

(11) **EP 2 514 325 A2**
(43) Date de publication de la demande: **24.10.2012**
(21) Numéro de dépôt: 12165113.7
(22) Date de dépôt: 23.04.2012
(51) Int. Cl.: A23L 3/00, A23L 3/02, A23L 3/04, B65B 55/14

(54) **Panier tubulaire convenant pour le traitement thermique de produits conditionnés dans des boîtes.**

(30) Priorité: 21.04.2011 FR 1101259
(71) Demandeur: TCF Industrie, 59190 Hazebrouck (FR)
(72) Inventeur: Debril, Lionel, 59190 Hazebrouck (FR)
(74) Mandataire: Bureau Duthoit Legros Associés

(57) **Abrégé**

L'invention concerne un panier tubulaire (1) présentant un axe longitudinal (Δ), convenant pour le traitement thermique de produits conditionnés dans des boîtes, notamment la stérilisation desdits produits, ledit panier tubulaire (1) étant destiné à cheminer dans une installation de traitement, ledit axe longitudinal (Δ) dudit panier tubulaire (1) orienté à l'horizontal au cours du traitement thermique dans ladite installation, ledit panier tubulaire étant ouvert à ses extrémités pour le remplissage ou le vidage dudit panier tubulaire, ledit panier tubulaire (1) comprenant, d'une part, deux extrémités de guidage (2, 3) présentant chacune une paroi cylindrique (4), et d'autre part, une armature reliant de manière rigide lesdites extrémités de guidage entre elles, ladite armature étant constituée par une tôle cylindrique (5) de diamètre inférieur au diamètre des extrémités de guidage, à l'intérieur de laquelle peuvent être enfilées les boîtes, l'axe longitudinal desdites boîtes étant parallèle à l'axe longitudinal (Δ) dudit panier tubulaire (1), ladite tôle cylindrique (5) étant pourvue de lumières (6), chaque extrémité de guidage (2, 3) venant en recouvrement de ladite tôle cylindrique (5).

Selon l'invention, la paroi cylindrique (4) de chacune desdites extrémités de guidage (2, 3) est pourvue de lumières (7).

## Description

L'invention est relative à un panier tubulaire convenant pour le traitement thermique de produits conditionnés dans des boîtes. Ce panier tubulaire trouvera une application particulière pour la stérilisation de boîtes de conserve, notamment cylindriques.

Dans le domaine de la stérilisation on connaît du document FR 1.028.542 un appareil de traitement thermique convenant pour la stérilisation de produits contenus dans des boîtes de conserve.

Dans l'appareil de ce document, les boîtes de conserve sont introduites dans des paniers tubulaires parcourant un circuit au travers d'enceintes de traitement. Ces paniers tubulaires sont ouverts à leurs extrémités afin de permettre leur remplissage ou leur vidage avec les boîtes de conserve. Ces paniers tubulaires sont transportés au moyen de chaînes de transport, constituant également des obturateurs pour les extrémités ouvertes des paniers tubulaires.

Chaque panier tubulaire est constitué de deux extrémités de guidage, appelées douilles de renfort dans le document FR 1.0128.542, présentant une paroi globalement cylindrique, et destinées à coopérer avec des doigts de soutien desdites chaînes de transport. Ces extrémités de guidage sont reliées entre elles, rigidement, au moyen d'une tôle cylindrique, pourvues de perforations, recevant lesdites boîtes. Ces perforations sont prévues pour favoriser le passage du fluide de traitement de l'enceinte, à savoir de l'eau à température.

Dans le document FR 1.028.542, les boîtes sont introduites de telle façon que l'axe longitudinal desdites boîtes soit parallèle à l'axe longitudinal dudit panier tubulaire.

Aujourd'hui encore, ce type de panier tubulaire est toujours utilisé pour la stérilisation. Les paniers tubulaires utilisés aujourd'hui diffèrent toutefois de ceux divulgués dans le document FR 1.028.542 en ce que les extrémités de guidage sont en recouvrement au niveau des extrémités de la tôle cylindrique perforée, constituées chacune par un manchon plein. Les extrémités de guidage sont donc de diamètre supérieur au diamètre de ladite tôle cylindrique.

Chaque manchon est fixé en repoussant la matière du manchon sur l'extrémité de la tôle cylindrique et d'autre part, à l'autre extrémité du manchon grâce à des soudures entre le manchon et la tôle cylindrique perforée.

La tôle cylindrique perforée des paniers de l'état de la technique est obtenue à partir d'une feuille métallique, après mise en forme de la feuille métallique en cylindre et soudage de deux bords de la feuille suivant une ligne de soudure.

Un tel panier tubulaire présente toutefois, selon l'inventeur, les inconvénients suivants :
- il permettrait une stérilisation médiocre des boites au niveau des extrémités du panier tubulaire, recouvertes par lesdites extrémités de guidage,
- on constaterait à l'usage une rupture des soudures entre les extrémités de guidage et ladite tôle cylindrique perforée, ainsi qu'une rupture de la ligne de soudure entre les deux bords de la feuille métallique constituant la tôle cylindrique perforée,
- ce type de paniers tubulaires engendrait une consommation énergétique trop importante des installations de traitement dans lesquelles il est utilisé.

L'art antérieur connaît également des documents EP 0 082 228 et WO 92/07478 des paniers tubulaires dans lesquels l'axe longitudinal des boîtes est perpendiculaire à l'axe longitudinal dudit panier tubulaire.

Le but de la présente invention est de pallier tout ou partie des inconvénients précités en proposant un panier tubulaire permettant un meilleur traitement thermique des boîtes disposées aux extrémités dudit panier tubulaire.

Un autre but de l'invention est de proposer un panier tubulaire permettant de diminuer la consommation énergétique de l'installation dans laquelle il est utilisé.

Un autre but de l'invention est de proposer un panier tubulaire de durée de vie supérieure par rapport aux paniers de l'état de la technique.

D'autres buts et avantages de l'invention apparaitront au cours de la description qui va suivre qui n'est donnée qu'à titre indicatif et qui n'a pas pour but de la limiter.

L'invention concerne un panier tubulaire présentant un axe longitudinal, convenant pour le traitement thermique de produits conditionnés dans des boîtes, notamment la stérilisation desdits produits, ledit panier tubulaire étant destiné à cheminer dans une installation de traitement, ledit axe longitudinal dudit panier tubulaire orienté à l'horizontal au cours au cours du traitement thermique dans ladite installation, ledit panier tubulaire étant ouvert à ses extrémités pour le remplissage ou le vidage dudit panier tubulaire avec lesdites boîtes, ledit panier tubulaire comprenant, d'une part, deux extrémités de guidage présentant chacune une paroi cylindrique, et d'autre part, une armature reliant de manière rigide lesdites extrémités de guidage entre elles, ladite armature étant constituée par une tôle cylindrique de diamètre inférieure au diamètre des extrémités de guidage, à l'intérieur de laquelle peuvent être enfilées les boites, l'axe longitudinal desdites boîtes étant parallèle à l'axe longitudinal dudit panier tubulaire, ladite tôle cylindrique étant pourvue de lumières, chaque extrémité de guidage venant en recouvrement de ladite tôle cylindrique.

Selon l'invention, la paroi cylindrique de chacune desdites extrémités de guidage est pourvue de lumières.

Selon des caractéristiques optionnelles, prises seules ou en combinaison :
- chaque extrémité de guidage est fixée à ladite tôle cylindrique de ladite armature au moyen d'une unique ligne de soudure, circulaire, entre ladite extrémité de guidage et ladite tôle cylindrique ;
- chaque extrémité de guidage est fixée, par l'intermédiaire d'un bord de fixation, circulaire, de l'extrémité de guidage à l'extrémité de ladite tôle cylindrique, ladite ligne de soudure étant réalisée entre le bord de fixation de l'extrémité de guidage et ladite tôle cylindrique ;

- ledit bord de fixation de l'extrémité de guidage forme une nervure circulaire, saillante radialement intérieurement à l'extrémité de guidage, coopérant avec ladite tôle cylindrique de telle façon que la surface intérieure de la paroi cylindrique de l'extrémité de guidage et la surface extérieure de la tôle cylindrique soit espacée radialement d'une distance d ;
- chaque extrémité de guidage présente, outre le bord de fixation formant une nervure circulaire, saillante radialement intérieurement à l'extrémité de guidage, des nervures longitudinales, saillantes radialement intérieurement à ladite extrémité de guidage, réparties angulairement autour de l'axe longitudinal dudit panier tubulaire, constituant respectivement des surfaces d'appui sur la surface extérieure de la tôle cylindrique ;
- le bord de fixation de chaque extrémité de guidage présente un chanfrein, à proximité du bord de ladite tôle cylindrique, apte à permettre le guidage des boîtes lors de l'insertion desdites boîtes dans ladite armature.
- ladite tôle cylindrique est constituée par une tôle cylindrique de contour fermée, pourvues desdites lumières, sans soudure apparente ;
- la tôle cylindrique est d'épaisseur comprise entre 1.1 mm et 1.3 mm ;
- lesdites lumières de ladite tôle cylindrique et/ou de chaque extrémité de guidage sont constituées par des ouvertures oblongues et/ou circulaires.

L'invention concerne également une installation de traitement hydrostatique convenant pour la stérilisation de produits contenus dans des boîtes, ladite installation de traitement comprenant :
- une enceinte de traitement apte à contenir un fluide tel que de l'eau
- des moyens de chauffage du fluide contenu dans ladite enceinte,
- des paniers tubulaires conformes à l'invention,
- des moyens pour convoyer lesdits paniers tubulaires, intérieurs à ladite enceinte, comprenant deux chaînes de transport, lesdites chaînes de transport étant espacées l'une de l'autre d'une distance correspondant à la longueur des paniers tubulaires, lesdites chaînes présentant des doigts engageant avec lesdites extrémités de guidage des paniers tubulaires, pour le soutien desdits paniers tubulaires, l'axe longitudinal desdits paniers tubulaires orienté à l'horizontal.

L'invention sera mieux comprise à la lecture de la description suivante accompagnée des dessins en annexe parmi lesquels :
- la figure 1 est une vue schématique, de face, d'un panier tubulaire conforme à l'invention,
- la figure 2a est vue de détail illustrant l'une des extrémités du panier tubulaire, tel qu'illustré à la figure 1, selon un premier mode de réalisation,
- la figure 2b est une vue de coupe, selon un plan passant par l'axe longitudinal du panier tubulaire, tel qu'illustré à la figure 2a,
- la figure 3 est une vue de coupe, partielle, selon un plan passant par l'axe longitudinal d'un panier tubulaire, conforme à l'invention selon un second mode de réalisation,
- la figure 4 est une vue de coupe, partielle, selon un plan passant par l'axe longitudinal d'un panier tubulaire, conforme à l'invention selon un troisième mode de réalisation,
- la figure 5 est une vue de coupe illustrant l'extrémité de guidage du panier tubulaire de la figure 3 ou de la figure 4, selon un plan de coupe passant par l'axe de la paroi cylindrique de ladite extrémité de guidage,
- la figure 6 est une vue de coupe illustrant l'extrémité de guidage du panier tubulaire de la figure 3 ou de la figure 4, selon un plan de coupe perpendiculaire à l'axe de la paroi cylindrique de ladite extrémité de guidage.

Aussi l'invention concerne un panier tubulaire 1 présentant un axe longitudinal Δ, convenant pour le traitement thermique de produits conditionnés dans des boîtes, et plus particulièrement pour la stérilisation desdits produits.

Le panier tubulaire 1 est destiné à cheminer dans une installation de traitement, ledit axe longitudinal Δ dudit panier tubulaire 1 orienté à l'horizontal au cours du traitement thermique dans ladite installation.

Le panier tubulaire 1 est ouvert à ses extrémités permettant de remplir le panier tubulaire 1 avec lesdites boîtes, ou au contraire permettant le vidage dudit panier tubulaire.

Le panier tubulaire 1 comprend, d'une part, deux extrémités de guidage 2, 3 présentant chacune une paroi cylindrique 4, et d'autre part, une armature reliant de manière rigide lesdites extrémités de guidage entre elles. Les extrémités de guidage 2, 3, notamment métalliques, peuvent notamment être fixées par soudure à ladite armature.

Ladite armature est constituée par une tôle cylindrique 5 de diamètre inférieure au diamètre des extrémités de guidage 2, 3, chaque extrémité de guidage 2, 3 venant en recouvrement de ladite tôle cylindrique 5.

Selon l'invention, les boîtes peuvent être enfilées à l'intérieur de ladite tôle cylindrique 5, lesdites boites étant alors disposées de telle façon que l'axe longitudinal desdites boîtes, notamment cylindriques, est parallèle à l'axe longitudinal Δ dudit panier tubulaire 1.

Afin de favoriser les échanges thermiques, ladite tôle cylindrique 5 est pourvue de lumières 6 sur sa surface cylindrique, réparties notamment sur tout ou partie de la longueur de la tôle cylindrique.

Avantageusement, et selon l'invention, la paroi cylindrique 4 de chacune desdites extrémités de guidage 2, 3 est pourvue de lumières 7. Ces lumières 7 sont dimensionnées pour favoriser les échanges thermiques entre le fluide de traitement et les boîtes au niveau des extrémités du panier tubulaire, recouvertes par lesdites extrémités de guidage 2, 3.

Selon un mode de réalisation, chaque extrémité de guidage 2, 3 est fixée à ladite tôle cylindrique 5 de ladite armature au moyen d'une unique ligne de soudure 8, circulaire, continue ou discontinue, entre ladite extrémité de guidage 2, 3 et ladite tôle cylindrique 5. Cette fixation par une unique ligne de soudure permet aux extrémités de guidage 2, 3, d'une part, et à la tôle cylindrique 5, d'autre part, de se dilater et de se rétracter indépendamment l'une de l'autre, limitant ainsi les contraintes sur la soudure et ainsi les risques de rupture de soudure.

Selon un mode de réalisation illustré aux figures, chaque extrémité de guidage 2, 3 est fixée, par l'intermédiaire d'un bord de fixation 9, circulaire, de l'extrémité de guidage à l'extrémité de ladite tôle cylindrique 5, ladite ligne de soudure étant réalisée entre le bord de fixation 9 de l'extrémité de guidage 2, 3 et le bord 51 de ladite tôle cylindrique 5.

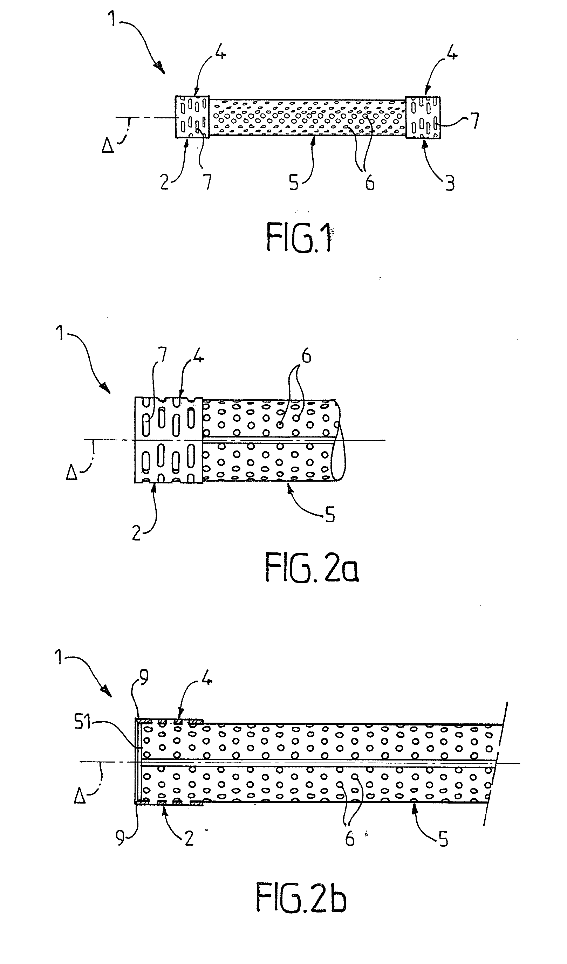

Selon un mode de réalisation illustré à la figure 2a et à la figure 2b, le diamètre intérieur de la paroi cylindrique 4 de chaque extrémité de guidage 2, 3 peut être ajusté, au jeu d'emboitement près, au diamètre extérieur de la tôle cylindrique 5. Selon ce mode de réalisation, chaque extrémité de la tôle cylindrique 5 est emboitée au jeu d'emboitement près dans la paroi cylindrique 4 de l'extrémité de guidage 2, 3 et est solidarisée par ladite soudure entre le bord de fixation 9 de l'extrémité de guidage 2, 3 et le bord 51 de la tôle cylindrique 5.

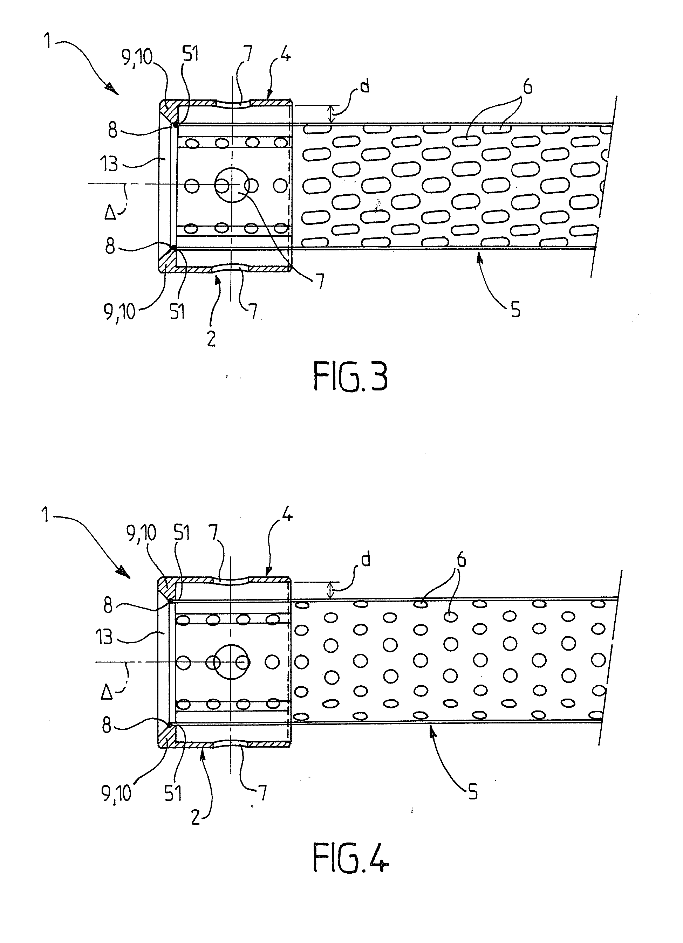

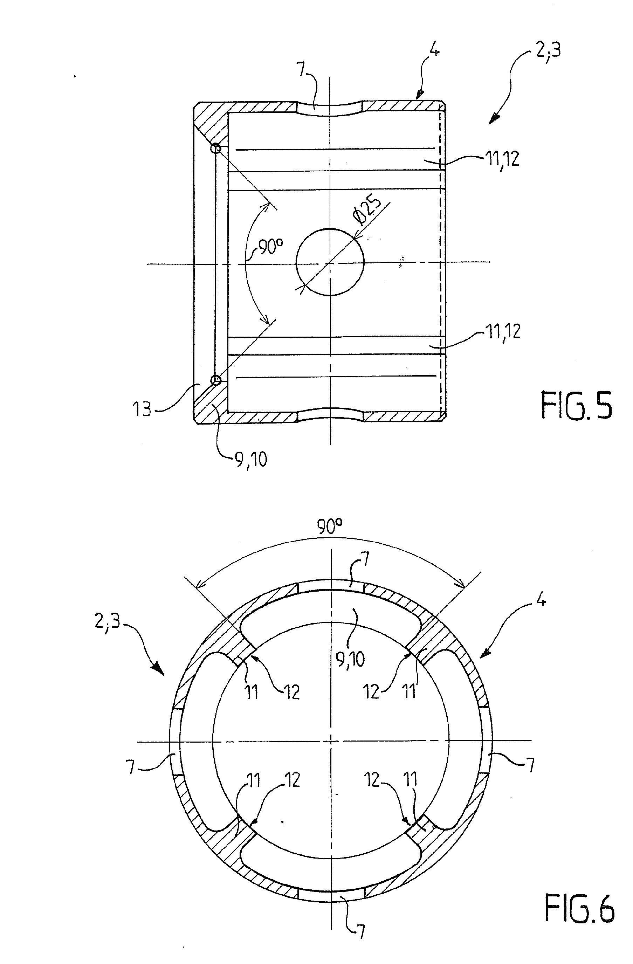

Selon un autre mode de réalisation illustré aux figures 3 à 6 notamment, la surface extérieure de la tôle cylindrique 5 est espacée radialement d'une distance d de la surface intérieure de la paroi cylindrique 4 de chaque extrémité de guidage 2, 3. La distance d peut être comprise entre 2 mm et 50 mm, notamment entre 5 mm et 50 mm.

A cet effet, selon un mode de réalisation, ledit bord de fixation 9 de l'extrémité de guidage 2, 3 forme une nervure circulaire, saillante 10 radialement intérieurement à l'extrémité de guidage 2, 3, coopérant avec ladite tôle cylindrique 5 de telle façon que la surface intérieure de la paroi cylindrique 4 de l'extrémité de guidage 2, 3 et la surface extérieure de la tôle cylindrique 5 soit espacée radialement de ladite distance d.

Par ailleurs, chaque extrémité de guidage 2, 3 peut présenter, outre le bord de fixation 9 formant ladite nervure circulaire, saillante 10 radialement intérieurement à l'extrémité de guidage 2, 3, des nervures longitudinales, saillantes 11 radialement intérieurement à ladite extrémité de guidage 2, 3, réparties angulairement autour de l'axe longitudinal Δ dudit panier tubulaire 1, constituant respectivement des surfaces 12 d'appui sur la surface extérieure de la tôle cylindrique 5.

Avantageusement, le bord de fixation 9 de chaque extrémité de guidage 2, 3 peut présenter un chanfrein 13, à proximité du bord 51 de ladite tôle cylindrique 5, apte à permettre le guidage des boîtes lors de l'insertion desdites boîtes dans ladite armature. Afin de permettre le guidage des boîtes, le bord de fixation 9 de chaque extrémité de guidage 2, 3 est prévu dépassant vers l'extérieur par rapport au bord 51 de la tôle cylindrique 5, notamment d'une distance correspondant à la dimension du chanfrein 13, selon ledit axe longitudinal Δ du panier 1.

Selon un mode de réalisation, ladite tôle cylindrique 5 peut être constituée par une tôle cylindrique de contour fermée, pourvue desdites lumières 6, sans soudure apparente. A cet effet on peut réaliser ladite tôle cylindrique 5 dudit panier tubulaire 1 à partir d'une feuille métallique, par la mise en oeuvre des étapes suivantes :
- une étape de mise en forme de ladite feuille métallique en cylindre,
- une étape de soudure des deux bords jointifs de ladite feuille métallique, au moyen d'une soudure pénétrante, engendrant une bavure de soudure,
- une étape de ponçage/polissage de la ligne de la bavure de soudure.

Avantageusement et notamment afin de limiter la masse des paniers tubulaires, la tôle cylindrique 5 peut être d'épaisseur comprise entre 1.1 mm et 1.3 mm. Dans cette tôle de faible épaisseur, lesdites lumières 6 peuvent être obtenues par découpe laser. Les lumières 7 de la paroi cylindrique 4 desdites extrémités de guidage 2, 3 peuvent être également obtenues par découpe laser.

Les lumières 6, 7 de ladite tôle cylindrique 5 et/ou de chaque extrémité de guidage 2, 3 peuvent être constituées par des ouvertures oblongues et/ou circulaires.

Le panier tubulaire conforme à l'invention trouve une application particulière pour la stérilisation de boîtes de conserve, notamment cylindriques.

L'invention concerne également une installation de traitement hydrostatique convenant pour la stérilisation de produits contenus dans des boîtes de conserve, ladite installation de traitement comprenant :
- une enceinte de traitement apte à contenir un fluide tel que de l'eau
- des moyens de chauffage du fluide contenu dans ladite enceinte,
- des paniers tubulaires 1, conformes à l'invention,
- des moyens pour convoyer lesdits paniers tubulaires 1, intérieurs à ladite enceinte, comprenant deux chaînes de transport, lesdites chaînes de transport étant espacées l'une de l'autre d'une distance correspondant à la longueur des paniers tubulaires 1, lesdites chaînes présentant des doigts engageant avec lesdites extrémités de guidage 2, 3 des paniers tubulaires 1, pour le soutien desdits paniers tubulaires 1, l'axe longitudinal Δ desdits paniers tubulaires orienté à l'horizontal.

Naturellement d'autres modes de réalisation auraient pu être envisagés par l'homme du métier sans pour autant sortir du cadre de l'invention défini par les revendications ci-après.

## Revendications

1. Panier tubulaire (1) présentant un axe longitudinal (Δ), convenant pour le traitement thermique de produits conditionnés dans des boîtes, notamment la stérilisation desdits produits, ledit panier tubulaire (1) étant destiné à cheminer dans une installation de traitement, ledit axe longitudinal (Δ) dudit panier tubulaire (1) orienté à l'horizontal au cours du traitement thermique dans ladite installation, ledit panier tubulaire étant ouvert à ses extrémités pour le remplissage ou le vidage dudit panier tubulaire, ledit panier tubulaire (1) comprenant, d'une part, deux extrémités de guidage (2, 3) présentant chacune une paroi cylindrique (4), et d'autre part, une armature reliant de manière rigide lesdites extrémités de guidage entre elles, ladite armature étant constituée par une tôle cylindrique (5) de diamètre inférieur au diamètre des extrémités de guidage, à l'intérieur de laquelle peuvent être enfilées les boîtes, l'axe longitudinal desdites boîtes étant parallèle à l'axe longitudinal (Δ) dudit panier tubulaire (1), ladite tôle cylindrique (5) étant pourvue de lumières (6), chaque extrémité de guidage (2, 3) venant en recouvrement de ladite tôle cylindrique (5), **caractérisé en ce que** la paroi cylindrique (4) de chacune desdites extrémités de guidage (2, 3) est pourvue de lumières (7).

2. Panier tubulaire selon la revendication 1, dans lequel chaque extrémité de guidage (2, 3) est fixée à ladite tôle cylindrique (5) de ladite armature au moyen d'une unique ligne de soudure (8), circulaire, entre ladite extrémité de guidage (2, 3) et ladite tôle cylindrique (5).

3. Panier tubulaire selon la revendication 2, dans lequel chaque extrémité de guidage (2, 3) est fixée, par l'intermédiaire d'un bord de fixation (9), circulaire, de l'extrémité de guidage à l'extrémité de ladite tôle cylindrique, ladite ligne de soudure étant réalisée entre le bord de fixation (9) de l'extrémité de guidage (2, 3) et ladite tôle cylindrique (5).

4. Panier tubulaire selon la revendication 3, dans lequel ledit bord de fixation (9) de l'extrémité de guidage (2, 3) forme une nervure circulaire, saillante (10) radialement intérieurement à l'extrémité de guidage (2, 3), coopérant avec ladite tôle cylindrique (5) de telle façon que la surface intérieure de la paroi cylindrique de l'extrémité de guidage (2, 3) et la surface extérieure de la tôle cylindrique (5) soit espacée radialement d'une distance d.

5. Panier tubulaire selon la revendication 4, dans lequel chaque extrémité de guidage (2, 3) présente, outre le bord de fixation (9) formant une nervure circulaire, saillante (10) radialement intérieurement à l'extrémité de guidage (2, 3), des nervures longitudinales, saillantes (11) radialement intérieurement à ladite extrémité de guidage (2, 3), réparties angulairement autour de l'axe longitudinal (Δ) dudit panier tubulaire (1), constituant respectivement des surfaces (12) d'appui sur la surface extérieure de la tôle cylindrique (5).

6. Panier tubulaire selon l'une des revendications 1 à 5, dans lequel le bord de fixation (9) de chaque extrémité de guidage présente un chanfrein (13), à proximité du bord de ladite tôle cylindrique (5), apte à permettre le guidage des boîtes lors de l'insertion desdites boîtes dans ladite armature.

7. Panier tubulaire selon l'une des revendications 1 à 6, dans lequel ladite tôle cylindrique (5) est constituée par une tôle cylindrique de contour fermé, pourvue desdites lumières (6), sans soudure apparente.

8. Panier tubulaire selon l'une des revendications 1 à 7, dans lequel la tôle cylindrique (5) est d'épaisseur comprise entre 1.1mm et 1.3 mm.

9. Panier tubulaire selon l'une des revendications 1 à 8, dans lequel lesdites lumières (6, 7) de ladite tôle cylindrique (5) et/ou de chaque extrémité de guidage (2, 3) sont constituées par des ouvertures oblongues et/ou circulaires.

10. Installation de traitement hydrostatique convenant pour la stérilisation de produits contenus dans des boîtes, ladite installation de traitement comprenant :
- une enceinte de traitement apte à contenir un fluide tel que de l'eau
- des moyens de chauffage du fluide contenus dans ladite enceinte,
- des paniers tubulaires (1) selon l'une des revendications 1 à 9,
- des moyens pour convoyer lesdits paniers tubulaires (1), intérieurs à ladite enceinte, comprenant deux chaînes de transport, lesdites chaînes de transport étant espacées l'une de l'autre d'une distance correspondant à la longueur des paniers tubulaires (1), lesdites chaînes présentant des doigts engageant avec lesdites extrémités de guidage (2, 3) des paniers tubulaires (1), pour le soutien desdits paniers tubulaires (1), l'axe longitudinal (Δ) desdits paniers tubulaires orienté à l'horizontal.
